# EUROPEAN PATENT APPLICATION

(11) **EP 4 793 847 A1**
(43) Date of publication of application: **19.08.2026**
(21) Application number: 24877135.4
(22) Date of filing: 07.10.2024
(51) Int. Cl.: G06Q 10/06

(54) **INFORMATION PROCESSING METHOD, INFORMATION PROCESSING DEVICE, AND PROGRAM**

(30) Priority: 10.10.2023 US 202363543342 P
(71) Applicant: Panasonic Intellectual Property Management Co., Ltd., Kadoma-shi, Osaka 571-0057 (JP)
(72) Inventor: NAKASAKA, Ayaka, Kadoma-shi, Osaka 571-0057 (JP); YAMAMOTO, Kakuya, Kadoma-shi, Osaka 571-0057 (JP); MIYAKE, Gaku, Kadoma-shi, Osaka 571-0057 (JP); MATSUDA, Genichiro, Kadoma-shi, Osaka 571-0057 (JP)
(74) Representative: Appelt, Christian W.
(86) International application number: PCT/JP2024/035717
(87) International publication number: WO 2025/079539

(57) **Abstract**

An information processing method includes: reading a smart contract code from a distributed ledger stored in a storage device of a server; and performing information processing using the distributed ledger, by executing the smart contract code read from the distributed ledger. The information processing includes: a reading process (S205) of reading, upon receiving a notification indicating that a final step among a plurality of steps performed to manufacture a product has ended, history information indicating one or more steps actually performed among the plurality of steps, and yield information indicating one or more yields of the one or more steps, from the distributed ledger; and a calculation process (S206) of calculating, using the history information and the yield information, impact information indicating an environmental impact generated in manufacturing the product, and storing the impact information in the distributed ledger.

## Description

### [Technical Field]

The present invention relates to information processing methods, information processing devices, and programs.

### [Background Art]

Conventionally, there have been cases where carbon footprints are measured in evaluation of product lifecycles (also referred to as lifecycle assessment).

In the measurement of carbon footprints, records of operation in steps for manufacturing products are used to derive activity levels for the manufacturing steps. The activity level, which is a source of carbon dioxide (CO₂) emissions in the manufacturing step, can be represented by the amount of materials used (kg), the amount of power consumption (kWh), or the like.

Furthermore, in the measurement of carbon footprints, environmental impacts are derived by multiplying the activity level by an emission factor. The emission factor is the amount of greenhouse gas (generally referred to as GHG) emissions per unit of activity levels that is determined in association with the activity level.

A derivation device is known that derives the amount of greenhouse gas emissions (refer to Patent Literature (PTL) 1).

### [Citation List]

### [Patent Literature]

[PTL 1]
Japanese Unexamined Patent Application Publication No. 2023-79153

### [Summary of Invention]

### [Technical Problem]

Conventionally, there have been cases where environmental impacts generated in manufacturing steps are not properly calculated.

The present invention provides an information processing method, etc., that contributes to proper calculation of environmental impacts generated in manufacturing steps.

### [Solution to Problem]

An information processing method according to an aspect of the present invention is performed by one server among a plurality of servers included in a distributed ledger system and includes: reading a smart contract code from a distributed ledger stored in a storage device of the one server; and performing information processing using the distributed ledger, by executing the smart contract code read from the distributed ledger. The information processing includes: a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and a calculation process of calculating, using the history information and the yield information, impact information indicating an environmental impact generated in manufacturing the product, and storing the impact information in the distributed ledger.

Note that these general and specific aspects may be implemented using a system, a device, an integrated circuit, a computer program, or a computer-readable recording medium such as compact disc read-only memory (CD-ROM), or any combination of systems, devices, integrated circuits, computer programs, and recording media.

### [Advantageous Effects of Invention]

The present invention contributes to proper calculation of environmental impacts generated in manufacturing steps.

### [Brief Description of Drawings]

[FIG. 1]

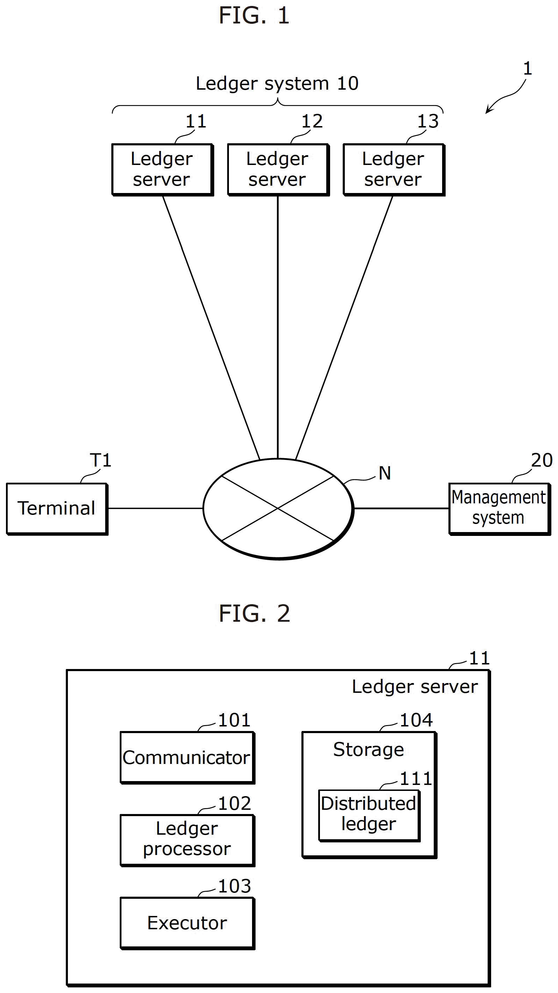

   FIG. 1 is a schematic diagram illustrating the overall configuration of an information processing system according to an embodiment.
[FIG. 2]
   FIG. 2 is a block diagram illustrating an example of the functional configuration of a ledger server according to an embodiment.
[FIG. 3]

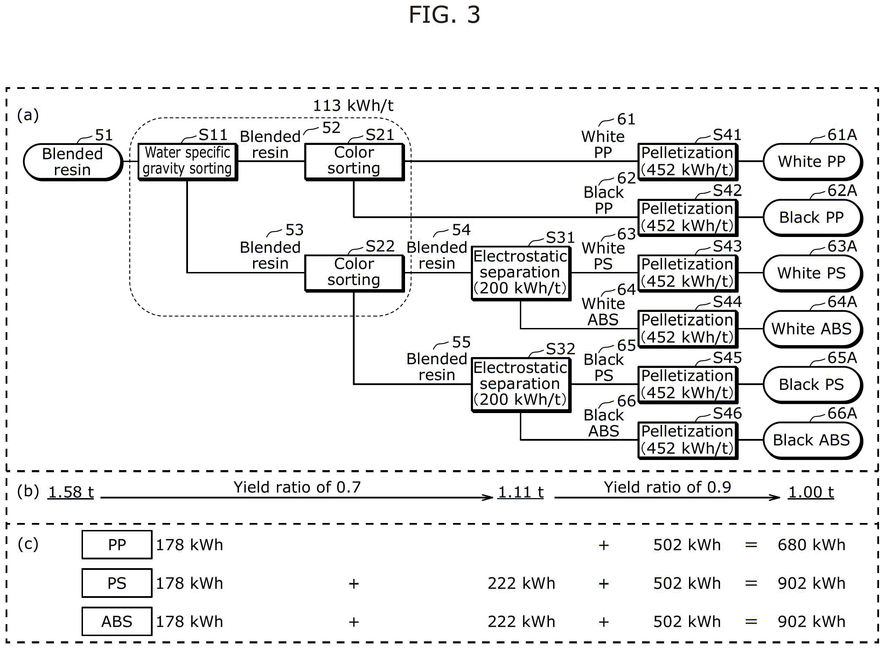

   FIG. 3 is an explanatory diagram illustrating the first example of steps for manufacturing products.
[FIG. 4]

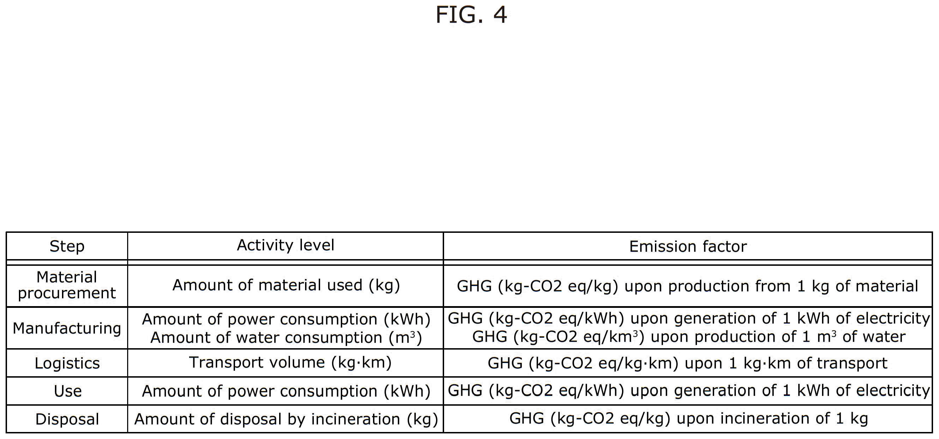

   FIG. 4 is an explanatory diagram illustrating an example of step information.
[FIG. 5]

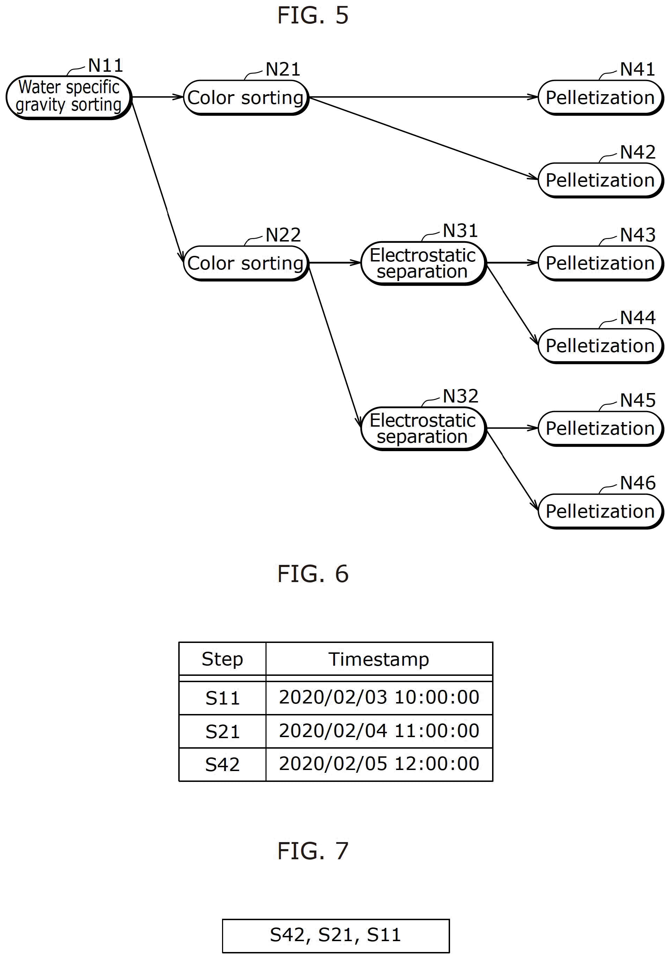

   FIG. 5 is an explanatory diagram illustrating the first example of execution sequence information according to an embodiment.
[FIG. 6]
   FIG. 6 is an explanatory diagram illustrating the first example of history information according to an embodiment.
[FIG. 7]
   FIG. 7 is an explanatory diagram illustrating an example of calculation sequence information according to an embodiment.
[FIG. 8]

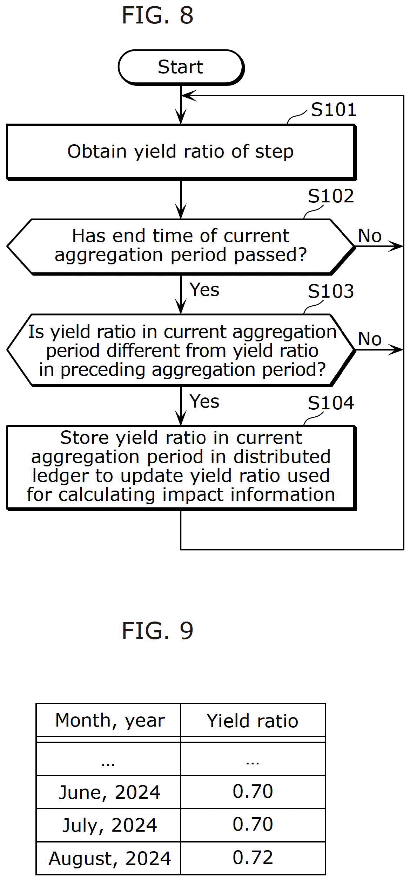

   FIG. 8 is a flowchart illustrating the first example of a smart contract process according to an embodiment.
[FIG. 9]
   FIG. 9 is an explanatory diagram illustrating an example of yield ratios according to an embodiment.
[FIG. 10]

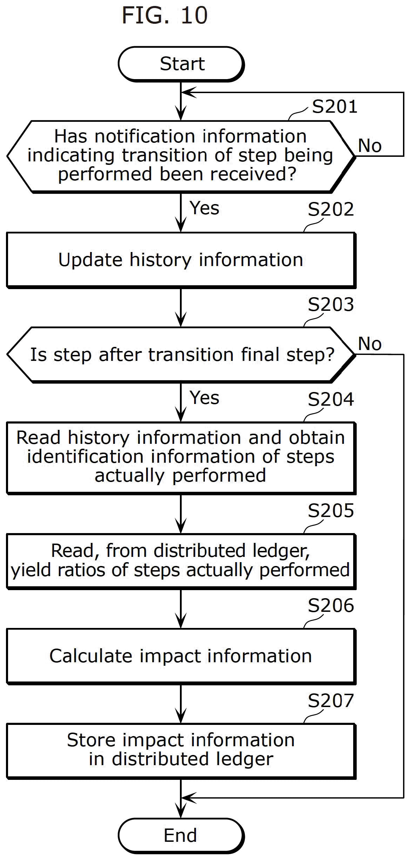

   FIG. 10 is a flowchart illustrating the second example of a smart contract process according to an embodiment.
[FIG. 11]

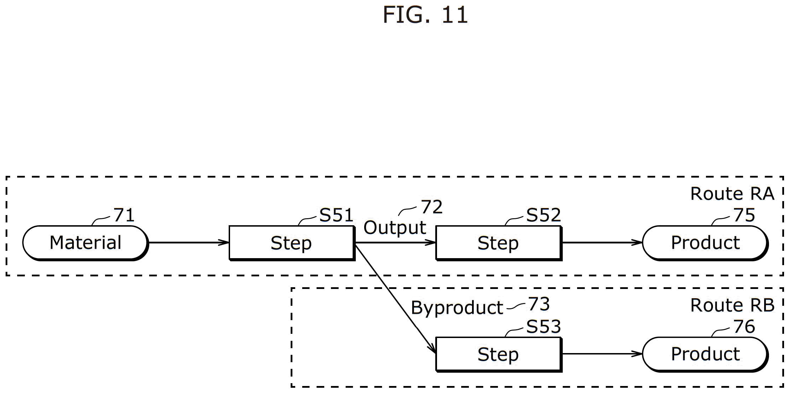

   FIG. 11 is an explanatory diagram illustrating the second example of step information according to an embodiment.
[FIG. 12]

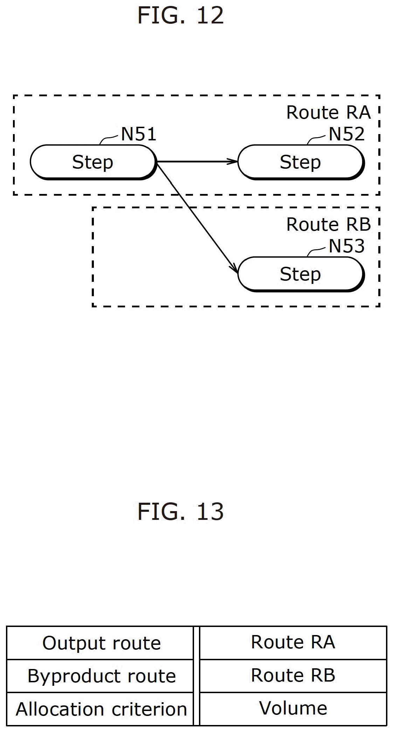

   FIG. 12 is an explanatory diagram illustrating the second example of execution sequence information according to an embodiment.
[FIG. 13]
   FIG. 13 is an explanatory diagram illustrating an example of route information according to an embodiment.
[FIG. 14]

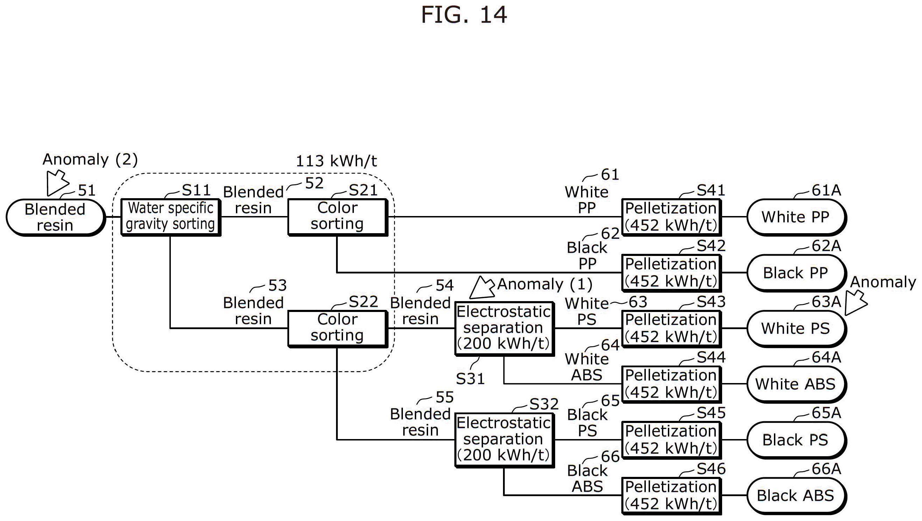

   FIG. 14 is an explanatory diagram illustrating a method for identifying an anomaly in a product by using execution sequence information according to an embodiment.
[FIG. 15]

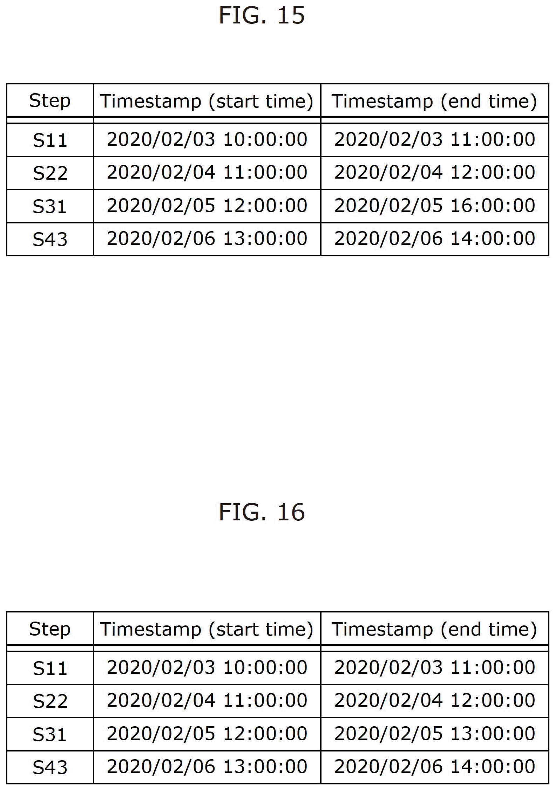

   FIG. 15 is an explanatory diagram illustrating the second example of history information according to an embodiment.
[FIG. 16]
   FIG. 16 is an explanatory diagram illustrating the third example of history information according to an embodiment.
[FIG. 17]

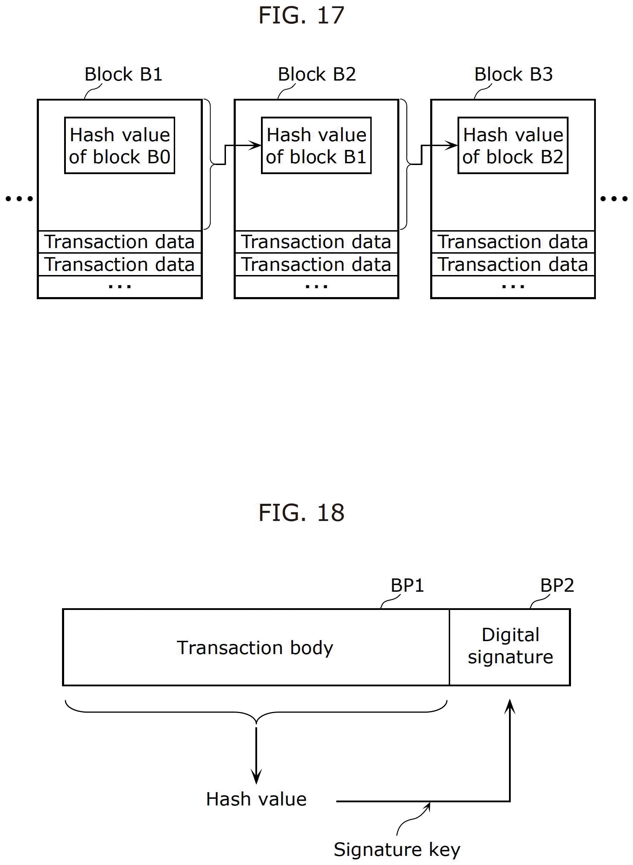

   FIG. 17 is an explanatory diagram illustrating the data structure of a blockchain which is an example of a distributed ledger.
[FIG. 18]
   FIG. 18 is an explanatory diagram illustrating the data structure of transaction data.
[FIG. 19]

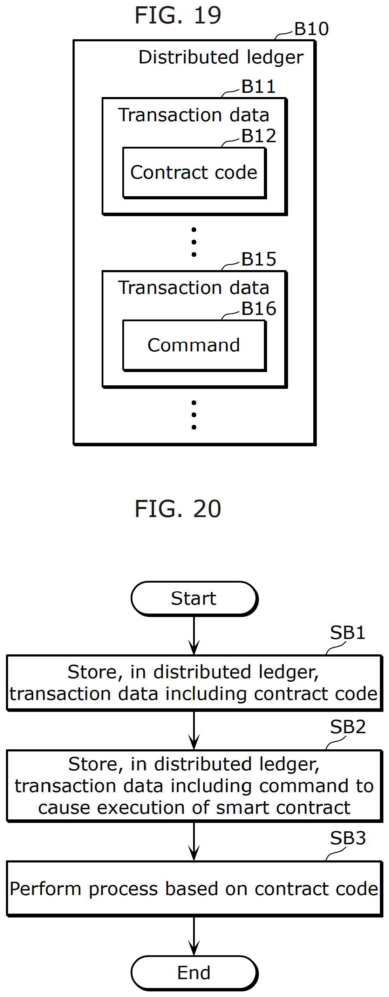

   FIG. 19 is an explanatory diagram illustrating transaction data related to execution of a smart contract.
[FIG. 20]
   FIG. 20 is a flowchart illustrating processing related to execution of a smart contract.
[FIG. 21]

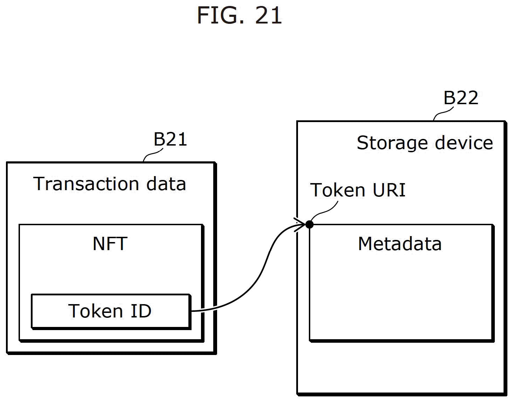

   FIG. 21 is an explanatory diagram illustrating the structures of an NFT and metadata.

### [Description of Embodiments]

### (Underlying Knowledge Forming Basis of the Present Invention)

The inventors identified that the following problems exist with the technique related to lifecycle assessment described in the "Background Art" section.

In the conventional lifecycle assessment, environmental impacts are calculated based on information (for example, log information, etc., of a manufacturing device) obtained over a relatively long period (for example, about one year). In this case, the environmental impacts generated in manufacturing steps may not be properly calculated.

For example, when the lifecycle assessment is conducted based on the log of a device (such as a manufacturing device or a measurement device) obtained over a relatively long period, the calculation cycle of environmental impacts is relatively long and thus, it may take a long time to obtain the results of the lifecycle assessment. Furthermore, calculating environmental impacts over a relatively short period, such as a few months or weeks, may be impossible or less accurate.

The present invention provides an information processing method, etc., that contributes to proper calculation of environmental impacts generated in manufacturing steps.

Hereinafter, an invention obtained from the disclosure of the present specification will be described as an example, and advantageous effects, etc., obtained from the invention will be explained.
(1) An information processing method is performed by one server among a plurality of servers included in a distributed ledger system and includes: reading a smart contract code from a distributed ledger stored in a storage device of the one server; and performing information processing using the distributed ledger, by executing the smart contract code read from the distributed ledger. The information processing includes: a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and a calculation process of calculating, using the history information and the yield information, impact information indicating an environmental impact generated in manufacturing the product, and storing the impact information in the distributed ledger.

According to this aspect, in view of the yield information, the server properly calculates an environmental impact generated in each step of manufacturing a product. At this time, the server automatically (in other words, without manual intervention) calculates an environmental impact and stores the calculated environmental impact in the distributed ledger, and thus can properly calculate and properly manage environmental impacts generated over a relatively short period (such as a few months or weeks). Furthermore, information tampering, fraudulent acts, and human errors by persons involved in the environmental impact calculation can be prevented. Thus, the server contributes to proper calculation of environmental impacts generated in manufacturing steps.

(2) In the information processing method described in (1), the yield information is one or more yield ratios of the one or more steps, and in the calculation process: with reference to the history information indicating the one or more steps, attention is focused on each of the one or more steps in a reverse order of a sequence in which the one or more steps are performed; and the impact information is calculated using at least a computation process in which a quantity of a workpiece after a step of interest is performed is multiplied by a reciprocal of a yield ratio of the step of interest to calculate a quantity of the workpiece before the step of interest is performed, the step of interest being a step on which the attention is focused.

According to this aspect, the server can more easily calculate the impact information by multiplying the reciprocals of the yield ratios of steps in the reverse order of a sequence in which the steps for products are actually performed. Thus, the server contributes to easier and proper calculation of environmental impacts generated in manufacturing steps.

(3) In the information processing method described in (1), the information processing further includes: a process of obtaining, from a management system, the yield information aggregated per predetermined aggregation period; and a process of updating, using the yield information obtained, the yield information used for calculating the impact information, and in the calculation process, the impact information is calculated using the yield information updated.

According to this aspect, by using the yield information obtained from the management system, the server can properly update the yield information for use in the calculation of the impact information. Thus, the server contributes to more proper calculation of environmental impacts generated in manufacturing steps.

(4) The information processing method described in (1) further includes: upon receiving notification information indicating that a step being performed has transitioned during manufacture of the product, updating the history information in the distributed ledger by additionally storing, in the history information, information indicating a step after the transition that is indicated in the notification information.

According to this aspect, the server updates the history information in line with the transition timing of the processes actually performed during the manufacture of the products, and thus can more easily calculate environmental impacts generated over a relatively short period (such as a few months or weeks). Thus, the server contributes to proper calculation of environmental impacts generated in manufacturing steps.

(5) In the information processing method described in (1), a reference value for an amount of the environmental impact is stored in the distributed ledger, and in the calculation process, the reference value is read from the distributed ledger, and when the amount of the environmental impact indicated in the impact information calculated is less than or equal to the reference value, the impact information is recalculated to indicate zero as the amount of the environmental impact.

According to this aspect, assuming a system in which when the amount of environmental impacts is less than or equal to a reference value, the amount of environmental impacts is regarded as zero, the server can properly calculate environmental impacts that comply with said system. Thus, the server contributes to proper calculation of environmental impacts generated in manufacturing steps.

(6) In the information processing method described in (1), when a byproduct is generated in the plurality of steps, the information processing further includes: a reading process of reading second history information and second yield information from the distributed ledger regarding a second product generated from the byproduct, the second history information indicating one or more second steps actually performed among a plurality of second steps performed to manufacture the second product, the second yield information indicating one or more yields of the one or more steps; and a calculation process of calculating, using the second history information and the second yield information, impact information indicating an environmental impact generated in manufacturing the second product, and storing the impact information in the distributed ledger.

According to this aspect, when a byproduct is generated, the server also automatically (in other words, without manual intervention) calculates the generated environmental impact in view of the yield information of each step for the second product generated from the byproduct, and stores the calculated environmental impact in the distributed ledger. Thus, even for the second product generated from the byproduct, the environmental impacts generated over a relatively short period (such as a few months or weeks) can be properly calculated and properly managed. Furthermore, information tampering, fraudulent acts, and human errors by persons involved in the environmental impact calculation can be prevented. Thus, the server contributes to proper calculation of environmental impacts generated in manufacturing steps.

(7) In the information processing method described in (1), the information processing further includes: when an anomaly exists in the product manufactured, an identifying process of identifying whether a cause of the anomaly lies in the one or more steps or in a material of the product, and storing, in the distributed ledger, identification information for identifying the cause of the anomaly.

According to this aspect, when an anomaly exists in the manufactured product, the server automatically (in other words, without manual intervention) calculates identification information for identifying the cause of the anomaly and stores the identification information in the distributed ledger; thus, information tampering, fraudulent acts, and human errors by persons involved in identifying the cause of the anomaly can be prevented. In this manner, while properly calculating the environmental impacts generated in manufacturing steps, the server contributes to identifying the cause of an anomaly in products.

(8) An information processing device is one server among a plurality of servers included in a distributed ledger system and includes: a processor; and memory connected to the processor. Using the memory, the processor: reads a smart contract code from a distributed ledger stored in a storage device of the one server; and performs information processing using the distributed ledger, by executing the smart contract code read from the distributed ledger. The information processing includes: a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and a calculation process of calculating, using the history information and the yield information, impact information indicating an environmental impact generated in manufacturing the product, and storing the impact information in the distributed ledger.

According to this aspect, advantageous effects are produced that are substantially the same as those produced by the above-described information processing method.

(9) A program causes a computer to execute the information processing method described in (1).

According to this aspect, advantageous effects are produced that are substantially the same as those produced by the above-described information processing method.

Note that these general and specific aspects may be implemented using a system, a device, an integrated circuit, a computer program, or a computer-readable recording medium such as CD-ROM, or any combination of systems, devices, integrated circuits, computer programs, or recording media.

Hereinafter, an embodiment will be specifically described with reference to the drawings.

Note that each embodiment described below shows a general or specific example. The numerical values, shapes, materials, structural elements, the arrangement and connection of the structural elements, steps, the processing order of the steps, etc., shown in the following embodiment are mere examples, and are not intended to limit the present invention. Among the structural elements in the following embodiment, structural elements not recited in any one of the independent claims which indicate the broadest concepts will be described as optional structural elements.

### [Embodiment]

The present embodiment will describe an information processing method and an information processing device that contribute to proper calculation of environmental impacts generated in manufacturing steps.

FIG. 1 is a schematic diagram illustrating the overall configuration of information processing system 1 according to the present embodiment. Information processing system 1 is an example of a system that contributes to proper calculation of environmental impacts generated in manufacturing steps.

As illustrated in FIG. 1, information processing system 1 includes ledger system 10 and management system 20. Information processing system 1 is connected to terminal T1. Note that information processing system 1 may further include terminal T1. Said devices are connected to network N and can perform communication via network N.

Ledger system 10 is an information processing system that stores information by using a distributed ledger. A variety of information or data can be stored in the distributed ledger of ledger system 10. In the distributed ledger of ledger system 10, for example, history information, yield information of steps, impact information, or a reference value for the amount of environmental impacts can be stored. The yield information may be information indicating the actual number of produced products relative to the amount of production expected from the amount of input raw materials.

Ledger system 10 can perform processing according to a smart contract by using the distributed ledger. Ledger system 10 can perform information processing through the processing according to the smart contract. The information processing performed by ledger system 10 will be specifically described later.

Ledger system 10 includes ledger servers 11, 12, 13 (also referred to as ledger servers 11, etc.) as a server group holding the distributed ledger. When at least one of ledger servers 11, etc., receives transaction data, the transaction data is shared by all ledger servers 11, etc., and is stored in the distributed ledger. Note that the number of ledger servers included in the server group is not limited to three and may be two or greater than three.

Ledger server 11 is a server that is a computer that holds and manages the distributed ledger. Ledger server 11, which holds the distributed ledger, updates the distributed ledger in synchronization with other ledger servers (specifically, ledger servers 12, 13).

Each of ledger servers 12, 13 is substantially the same server as ledger server 11 and operates independently of ledger server 11.

Management system 20 is a system that manages information regarding the manufacture of products.

Management system 20, which is connected to production lines for products, for example, updates management information indicating which step is actually being performed on a workpiece (including a material) during the manufacture of products. Furthermore, when the step for the workpiece transitions, management system 20 transmits, to ledger system 10, notification information indicating that the step being performed has transitioned.

Furthermore, management system 20 holds at least the yield information of steps included in steps for manufacturing products. Management system 20 can provide the yield information of steps to ledger system 10.

Terminal T1 is an information processing device used by a user. Terminal T1 can obtain, via network N, impact information generated by ledger system 10 and indicating an environmental impact, and display the obtained impact information on a display screen or output the obtained impact information in the form of audio through a loudspeaker, thereby presenting the obtained impact information to a user.

Terminal T1 includes a processor (for example, a central processing unit (CPU), same hereinafter), memory, a user interface (a display screen, a loudspeaker, a touch panel, or the like, same hereinafter), and a communication interface, and can accept information input through the user interface or the communication interface and generate information, display information, output information in the form of audio, or transmit and receive information. For example, terminal T1 can be a personal computer, a tablet, a smartphone, or the like.

FIG. 2 is a block diagram illustrating an example of the functional configuration of ledger server 11 according to the present embodiment.

Ledger server 11 is an information processing device that includes communicator 101, ledger processor 102, executor 103, and storage 104 as function units. At least some of the function units included in ledger server 11 are realized by a processor (for example, a CPU) in ledger server 11 executing a program using memory.

Communicator 101 is a communication interface connected to network N so as to allow communication therebetween. Communicator 101 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (the 3rd generation (3G), the 4th generation (4G), the 5th generation (5G), or the like)). Communicator 101 is used by a function unit of ledger server 11 to communicate with another device.

Ledger processor 102 performs the processing related to distributed ledger 111 and the transaction data. Specifically, when ledger processor 102 receives the transaction data from terminal T1, ledger processor 102 performs control to verify a digital signature included in the received transaction data and store, into distributed ledger 111 held by storage 104, the transaction data that has been successfully verified. In storing the transaction data into distributed ledger 111, ledger processor 102 can perform control to generate a block including the transaction data to be stored, and when ledger processor 102 and ledger processors 102 of ledger servers 12, 13, which are other ledger servers, form an agreement on the generated block, store said block into distributed ledger 111.

In distributed ledger 111, step information (refer to FIG. 4), execution sequence information (refer to FIG. 5), history information (refer to FIG. 6), calculation sequence information (refer to FIG. 7), and the like are stored. This information may be stored as part of the transaction data, may be stored as a contract code of the smart contract, or may be stored as the metadata of a non-fungible token (NFT). Note that when the information is stored as the metadata of an NFT, the main content of the information may be stored in a storage device (not illustrated in the drawings) connected to network N for reference using the token ID of the NFT. The information will be described in detail later.

Executor 103 performs information processing. For example, executor 103 can perform information processing by executing a smart contract using distributed ledger 111. Executor 103 reads the smart contract code stored in distributed ledger 111, executes the smart contract code read from distributed ledger 111, and performs information processing using distributed ledger 111. The information processing performed by executor 103 will be specifically described later.

Note that when executor 103 does not use a smart contract, executor 103 can perform information processing according to a regular program code.

Storage 104 is a storage device that stores information. In storage 104, distributed ledger 111 is stored. Storage 104 is realized by a non-volatile storage device (such as a solid-state drive (SSD) or a hard disk drive (HDD)) or the like.

Distributed ledger 111 stores data having a structure in which blocks including one or more transaction data are linked together in the form of a chain. The transaction data stored in distributed ledger 111 includes transaction data including a contract code of a smart contract, transaction data including a command to execute a smart contract, or transaction data including other information.

FIG. 3 is an explanatory diagram illustrating the first example of steps for manufacturing products.

In FIG. 3, (a) illustrates, as the steps for manufacturing products, a plurality of steps performed to manufacture a product (also referred to as a first product) from a material. A target on which the steps are performed is also referred to as a workpiece, and an object resulting from the steps is also referred to as an output. The workpiece in the first step is a material. The output of the final step is a product.

Blended resin 51 indicated in FIG. 3 is an example of the material. Blended resin 51 is a resin mixture of white polypropylene (PP) resin, black PP, white polystyrene (PS) resin, white acrylonitrile butadiene styrene (ABS) resin, black PS, and black ABS.

White PP 61A, black PP 62A, white PS 63A, white ABS 64A, black PS 65A, and black ABS 66A indicated in FIG. 3 are an example of the products.

In FIG. 3, Step S11, which is a water specific gravity sorting step, Steps S21 and S22, which are color sorting steps, Steps S31 and S32, which are electrostatic separation steps, and Steps S41, S42, S43, S44, S45, and S46, which are pelletizing steps, are an example of the steps.

Step S11, which is a water specific gravity sorting step, is the step of performing water specific gravity sorting involving blended resin 51 as a workpiece. In Step S11, blended resin 51 is separated into blended resin 52 and blended resin 53. Blended resin 52 and blended resin 53 correspond to the output. Blended resin 52 is a blended resin that is a mixture of the white PP and the black PP. Blended resin 53 is a blended resin that is a mixture of the white PS, the white ABS, the black PS, and the black ABS.

Step S21, which is a color sorting step, is the step of performing color sorting involving blended resin 52 as a workpiece. In Step S21, blended resin 52 is separated into white PP 61 and black PP 62. White PP 61 and black PP 62 correspond to the output. Note that white PP 61 and black PP 62 have not been pelletized (also generally referred to as not having been formed into pellets) at the end of Step S21.

Step S22, which is a color sorting step, is the step of performing color sorting involving blended resin 53 as a workpiece. In Step S22, blended resin 53 is separated into blended resin 54 and blended resin 55. Blended resin 54 and blended resin 55 correspond to the output. Blended resin 54 is a blended resin that is a mixture of the white PS and the white ABS. Blended resin 55 is a blended resin that is a mixture of the black PS and the black ABS.

Step S31, which is an electrostatic separation step, is the step of performing electrostatic separation involving blended resin 54 as a workpiece. In Step S31, blended resin 54 is separated into white PS 63 and white ABS 64. White PS 63 and white ABS 64 correspond to the output. Note that white PS 63 and white ABS 64 have not been pelletized at the end of Step S31.

Step S32, which is an electrostatic separation step, is the step of performing electrostatic separation involving blended resin 55 as a workpiece. In Step S32, blended resin 55 is separated into black PS 65 and black ABS 66. Black PS 65 and black ABS 66 correspond to the output. Note that black PS 65 and black ABS 66 have not been pelletized at the end of Step S32.

Step S41, which is a pelletizing step, is the step of performing pelletization involving white PP 61 as a workpiece. In Step S41, pelletized white PP 61A is obtained from unpelletized white PP 61. White PP 61A corresponds to the output.

Step S42, which is a pelletizing step, is the step of performing pelletization involving black PP 62 as a workpiece. In Step S42, pelletized black PP 62A is obtained from unpelletized black PP 62. Black PP 62A corresponds to the output.

Step S43, which is a pelletizing step, is the step of performing pelletization involving white PS 63 as a workpiece. In Step S43, pelletized white PS 63A is obtained from unpelletized white PS 63. White PS 63A corresponds to the output.

Step S44, which is a pelletizing step, is the step of performing pelletization involving white ABS 64 as a workpiece. In Step S44, pelletized white ABS 64A is obtained from unpelletized white ABS 64. White ABS 64A corresponds to the output.

Step S45, which is a pelletizing step, is the step of performing pelletization involving black PS 65 as a workpiece. In Step S45, pelletized black PS 65A is obtained from unpelletized black PS 65. Black PS 65A corresponds to the output.

Step S46, which is a pelletizing step, is the step of performing pelletization involving black ABS 66 as a workpiece. In Step S46, pelletized black ABS 66A is obtained from unpelletized black ABS 66. Black ABS 66A corresponds to the output.

In FIG. 3, (b) illustrates an example of the quantity of workpieces and products and the yield ratios of the steps. Here, the yield ratio is an example of the yield information. The yield ratio can be the ratio of the actual number of produced products relative to the amount of production expected from the amount of input raw materials. The following describes an example where the yield ratio is used as the yield information.

As illustrated in (b) in FIG. 3, the total yield ratio of Steps S11, S21, and S22 is 0.7. The total yield ratio of Steps S31 and S32 and Steps S41 to S46 is 0.9.

The quantity of blended resin 51 is 1.58 t. The quantity of blended resin 54 and blended resin 55 is calculated as 1.11 t by multiplying the quantity of blended resin 51 by the yield ratio of 0.7. Here, blended resin 51 is a material and is also a workpiece. Note that in this example, the weight of a workpiece is used as the quantity of the workpiece. The same applies hereinafter.

The quantity of white PP 61A, black PP 62A, white PS 63A, white ABS 64A, black PS 65A, and black ABS 66A is calculated as 1.00 t by multiplying the quantity of blended resin 54 and blended resin 55 by the yield ratio of 0.9. Here, blended resin 54 and blended resin 55 are workpieces.

Note that when the quantity of products (specifically, white PP 61A, black PP 62A, white PS 63A, white ABS 64A, black PS 65A, and black ABS 66A) is known and the quantity of a material (specifically, blended resin 51) is unknown, the quantity of the material can be calculated from the quantity of the products using the yield ratios, contrary to a computation in which the quantity of the products are calculated from the quantity of the material using the yield ratios.

Specifically, the quantity of blended resin 54 and blended resin 55 is calculated as 1.11 t by multiplying the quantity of the products, 1.00 t, by the reciprocal of the yield ratio, 1/0.9. Furthermore, the quantity of the material can be calculated as 1.58 t by multiplying the quantity of blended resin 54 and blended resin 55, 1.11 t, by the reciprocal of the yield ratio, 1/0.7.

In FIG. 3, (c) illustrates power consumption in the plurality of steps performed to manufacture the products from the material.

In manufacturing the PP resin (specifically, white PP 61A and black PP 62A), Step S11 and Step S21 or S22 are performed first. The total power consumption in these steps is 178 kWh according to (Expression 1) below.$113 \left(kWh/t\right) \times 1.58 \left(t\right) = 178 \left(kWh\right)$

Next, Step S41 or S42 is performed. The total power consumption in these steps is 502 kWh according to (Expression 2) below.$452 \left(kWh/t\right) \times 1.11 \left(t\right) = 502 \left(kWh\right)$

As a result, the power consumption in manufacturing the PP resin is 680 kWh, calculated as the sum of 178 kWh and 502 kWh.

In manufacturing the PS resin (specifically, white PS 63A and black PS 65A), Step S11 and Step S21 or S22 are performed first. The total power consumption in these steps is 178 kWh according to (Expression 1) above.

Next, Step S31 or S32 is performed. The total power consumption in these steps is 222 kWh according to (Expression 3) below.$200 \left(kWh/t\right) \times 1.11 \left(t\right) = 222 \left(kWh\right)$

Next, Step S43, S44, S45, or S46 is performed. The total power consumption in these steps is 502 kWh according to (Expression 2) above.

The manufacture of the ABS resin (specifically, white ABS 64A and black ABS 65A) is the same as or similar to the manufacture of the PS resin.

As a result, the power consumption in manufacturing the PS resin or the ABS resin is 902 kWh, calculated as the sum of 178 kWh, 222 kWh, and 502 kWh.

It is expected that the 680 kWh power consumption for manufacturing the PP resin, shown in (c) in FIG. 3, represents the power consumption per 1 t of the PP resin. When this applies to a different weight of the PP resin, kWh/t may be used as a unit.

FIG. 4 is an explanatory diagram illustrating an example of the step information. The step information is stored in distributed ledger 111 of ledger server 11, etc. The step information may be updated.

In FIG. 4, the activity levels and the emission factors for the steps are indicated as the step information of the steps performed in manufacturing the products. The emission factor is the amount of greenhouse gas (generally referred to as GHG) emissions per unit of activity levels that is determined in association with the activity level. The emission factor is expressed, for example, as a CO2 level (kg - CO2 eq/kg) obtained by converting the amount of greenhouse gas emissions into an amount of CO2 that has environmental impacts equivalent to those of said greenhouse gas.

As shown in FIG. 4, for example, the activity level for the "material procurement" step is the amount of material used (kg), and the emission factor thereof is the amount of greenhouse gas generated in manufacturing 1 kg of that material.

One activity level for the "manufacturing" step is the amount of power consumption (kWh), and the emission factor thereof is the amount of greenhouse gas generated in generating electricity of 1 kWh.

Another activity level for the "manufacturing" step is the amount of water consumption (cubic meters), and the emission factor thereof is the amount of greenhouse gas generated in producing one cubic meter of water.

Note that the activity levels and the emission factors for the "logistics," "use," and "disposal" steps are as shown in FIG. 4.

FIG. 5 is an explanatory diagram illustrating the first example of the execution sequence information according to the present embodiment.

The execution sequence information is information indicating: a plurality of steps performed to manufacture products; and a sequence in which the steps are performed. The execution sequence information is stored in distributed ledger 111 of ledger server 11, etc. The execution sequence information may be updated.

The execution sequence information illustrated in FIG. 5 is information representing, as a graph (more specifically, a directed graph): the plurality of steps performed to manufacture products; and the sequence in which the steps are performed.

In FIG. 5, the nodes correspond to the steps, and the edges indicate the sequence of the steps.

The step performed first among the steps for manufacturing products corresponds to node N11 which is a source node (that is, a node that has outgoing edges but no incoming edges).

The steps performed last (final steps) among the steps for manufacturing products correspond to nodes N41, N42, N43, N44, N45, and N46 each of which is a sink node (that is, a node that has incoming edges but no outgoing edges).

Note that the form of expression of the execution sequence information is not limited to a graph and may be any form that uniquely represents the manufacturing steps. For example, the execution sequence information may be information in which the items of identification information indicating the steps are arranged from left to right in the order in which the steps are performed. Specifically, the execution sequence information may be the information "(S11, S21, S41), (S11, S21, S42), (S11, S22, S31, S43), (S11, S22, S31, S44), (S11, S22, S32, S45), (S11, S22, S32, S46)." Here, the plurality of steps included in one set of parentheses "( )" represent a series of steps performed to manufacture products. Note that the commas are used as delimiters of the identification information. Furthermore, the reference signs of the steps are used as the identification information indicating the steps. For example, the identification information indicating Step S11 is denoted as "S11." The same applies to the other steps.

FIG. 6 is an explanatory diagram illustrating the first example of the history information according to the present embodiment.

The history information includes the identification information indicating steps actually performed on workpieces, in the order in which the steps are actually performed. The history information is stored in distributed ledger 111 of ledger server 11, etc. The history information is updated upon the transition of the steps.

The history information illustrated in FIG. 6 is structured so that each step corresponds to one row, as an example. The step performed first is positioned in the top row of the history information, and subsequent steps are sequentially positioned in the following rows of the history information.

Furthermore, the history information includes timestamps each indicating the time of day at which the step is performed. Note that the timestamp may indicate the time of day at which the execution of the step is started, may indicate the time of day at which the execution of the step is ended, or may indicate both of these times of day.

The history information illustrated in FIG. 6 indicates that Step S11 was performed first at 10:00:00 on February 3, 2020, then Step S21 was performed at 11:00:00 on February 4, 2020, and Step S42 was performed at 12:00:00 on February 5, 2020.

When ledger server 11, etc., receives notification information from management system 20, the history information can be updated using information indicating the step after the transition that is indicated in said notification information. When the notification information includes a timestamp, the timestamp may be added to the history information. Furthermore, the time of day when the notification information was received may be added to the history information as a timestamp.

Note that each step (in other words, each row) of the history information may be included in the transaction data when the history information is stored in distributed ledger 111. When the notification information is received by receiving the transaction data including the notification information, it can be said that the history information is updated by storing the received transaction data into distributed ledger 111.

FIG. 7 is an explanatory diagram illustrating an example of the calculation sequence information according to the present embodiment.

The calculation sequence information is information indicating the order of the steps subject to calculation during the calculation of impact information indicating the environmental impacts generated in manufacturing the products. The calculation sequence information is stored in distributed ledger 111 of ledger server 11, etc. The calculation sequence information may be updated.

The calculation sequence information illustrated in FIG. 7 is, for example, information in which the steps subject to calculation are arranged from left to right. Specifically, in the calculation sequence information illustrated in FIG. 7, the first step subject to the calculation is positioned on the far left, and subsequent steps subject to the calculation are sequentially arranged to the right. Note that the commas are used as delimiters of the identification information.

The calculation sequence information illustrated in FIG. 7 may be predetermined or may be generated by ledger server 11, etc., by reversing the sequence of steps actually performed that is indicated in the history information (refer to FIG. 6).

The following describes the smart contract process performed by ledger system 10 configured as described above.

FIG. 8 is a flowchart illustrating the first example of the smart contract process according to the present embodiment. FIG. 9 is an explanatory diagram illustrating an example of yield ratios according to the present embodiment.

With reference to FIG. 8 and FIG. 9, the first example of the smart contract process according to the present embodiment will be described.

The process illustrated in FIG. 8 includes the process of updating the yield ratio for each predetermined aggregation period. The aggregation period is, for example, one month. In this case, one month as the aggregation period may be the period from the first day of a month to the last day (28th, 29th, 30th, or 31st) of said month or may be the period from one day of a month to the preceding day of the corresponding day of the next month. Note that when there is no "corresponding day of the next month," the aggregation period may be the period up to the last day of "the next month."

Note that said one day can be set in association with an event such as the receipt of a material or the production or shipment of a product. Said one day can be, for example, the date of the receipt of a material or the date of the start of production, the date of the end of production, or the date of shipment or delivery for a product.

Note that the length of the aggregation period may be one week to a few weeks or one day to a few days.

The following describes an example where the aggregation period is one month, from one day of a month to the last day of that month. The aggregation period including a point in time at which initial Step S101 is performed is referred to as "the current aggregation period."

In Step S101, executor 103 obtains the yield ratio of the steps. Management system 20 can calculate the yield ratio of the steps for each of predetermined aggregation periods, and provide the yield ratios. Ledger system 10 (more specifically, executor 103) can obtain, from management system 20, the yield ratio of one or more steps calculated for each of the predetermined aggregation periods. The one or more steps are one or more steps actually performed on workpieces among the plurality of steps. Executor 103 may store the obtained yield ratios into distributed ledger 111.

FIG. 9 illustrates an example of the yield ratio of the steps (for example, Steps S11, S21, and S22) for each of the aggregation periods that is held by management system 20.

FIG. 9 illustrates an example of the yield ratio of the steps held by management system 20 on one day of August, 2024. The yield ratios shown in FIG. 9 indicate that the yield ratios in June, July, and August of 2024 are 0.70, 0.70, and 0.72, respectively. Each of June, July, and August of 2024 corresponds to the aggregation period. Note that the yield ratio in August of 2024 represents the yield ratio calculated for the period from August 1, 2024 to said one day. Note that when the one day is before August 31, the yield ratio in August of 2024 is not the yield ratio calculated for the entire period of August of 2024 (specifically, the period from August 1 to 31, 2024). When the one day is August 31, the yield ratio in August of 2024 matches the yield ratio calculated for the entire period of August of 2024 (specifically, the period from August 1 to 31, 2024).

In Step S102, executor 103 determines whether the end time of the current aggregation period has passed. Executor 103 compares the current time and the end time of the current aggregation period and when determining that the current time is later than the end time of the current aggregation period, can determine that the end time of the current aggregation period has passed. When executor 103 determines that the end time of the current aggregation period has passed (Yes in Step S102), executor 103 proceeds to Step S103; otherwise (No in Step S102), executor 103 performs Step S101 again.

In Step S103, executor 103 determines whether the yield ratio in the current aggregation period is different from the yield ratio in the preceding aggregation period. When executor 103 determines that the yield ratio in the current aggregation period is different from the yield ratio in the preceding aggregation period (Yes in Step S103), executor 103 proceeds to Step S104; otherwise (No in Step S103), executor 103 performs Step S101 again.

For example, when the current aggregation period is July, executor 103 determines that "the yield ratio in the current aggregation period" (specifically, the yield ratio in July), 0.70, is equal to (in other words, not different from) "the yield ratio in the preceding aggregation period" (specifically, the yield ratio in June), 0.70, and thus, executor 103 performs Step S101 again.

Furthermore, for example, when the current aggregation period is August, executor 103 determines that "the yield ratio in the current aggregation period" (specifically, the yield ratio in August), 0.72, is different from "the yield ratio in the preceding aggregation period" (specifically, the yield ratio in July), 0.70, and thus, executor 103 proceeds to Step S104.

In Step S104, executor 103 stores the yield ratio in the current aggregation period into distributed ledger 111. Thus, executor 103 updates the yield ratio for use in calculating the impact information. The updated yield ratio can be used for calculating the impact information (Step S206 to be described later).

For example, when the current aggregation period is August, executor 103 stores, into distributed ledger 111, "the yield ratio in the current aggregation period" (specifically, the yield ratio in August), 0.72, thereby updating the yield ratio for use in calculating the impact information.

When Step S104 ends, executor 103 proceeds to Step S101. At this time, executor 103 updates the current aggregation period to the next aggregation period. For example, when the current aggregation period is August, executor 103 updates the current aggregation period to September and proceeds to Step S101.

Through the series of steps illustrated in FIG. 8, ledger system 10 can update the yield ratio for each aggregation period.

FIG. 10 is a flowchart illustrating the second example of the smart contract process according to the present embodiment. The process illustrated in FIG. 10 includes ledger system 10 performing the process of calculating the impact information and storing the impact information into distributed ledger 111 when a product is manufactured.

The process illustrated in FIG. 10 is information processing performed using distributed ledger 111 by executor 103 reading the smart contract code stored in distributed ledger 111 and executing the smart contract code read from distributed ledger 111.

In Step S201, executor 103 determines whether executor 103 has received notification information indicating that the step being performed on the product has transitioned. The notification information to be received includes at least information indicating the step to be performed on the product after the transition. Said notification information may be the notification information transmitted by management system 20. When executor 103 determines that the notification information has been received (Yes in Step S201), executor 103 proceeds to Step S202; otherwise (No in Step S201), executor 103 performs Step S201 again. Specifically, executor 103 is on standby in Step S201 until executor 103 receives the notification information. Note that executor 103 may receive said notification information by receiving transaction data including said notification information.

In Step S202, executor 103 updates the history information. Specifically, executor 103 updates the history information by additionally storing, in the history information (refer to FIG. 6), information that is included in the notification information received in Step S201 and indicates the step after the transition. Note that when executor 103 receives the transaction data including said notification information, executor 103 updates the history information by storing, into distributed ledger 111, the transaction data including said notification information.

In Step S203, executor 103 determines whether the step after the transition that is indicated in the notification information received in Step S201 is the final step. By referring to the execution sequence information (refer to FIG. 5), executor 103 can determine whether the step after the transition is the final step. For example, when the execution sequence information is expressed as the graph illustrated in FIG. 5 and the node corresponding to the step after the transition is determined as a sink node, the step after the transition can be determined as the final step. When the step after the transition is determined as the final step (Yes in Step S203), the processing proceeds to Step S204; otherwise (No in Step S203), the series of steps illustrated in FIG. 10 terminates.

In Step S204, executor 103 reads the history information from distributed ledger 111 and obtains, from the read history information, the identification information of the steps actually performed. Executor 103 can obtain the identification information of the actually performed steps by obtaining, with reference to the history information, the identification information of the steps included in the history information.

In Step S205, executor 103 reads, from distributed ledger 111, the yield ratios of the steps actually performed.

In Step S206, executor 103 performs the calculation process of calculating, using the yield ratios of the actually performed steps read from distributed ledger 111 in Step S205, impact information indicating the environmental impacts generated in manufacturing the products.

In the calculation process, by referring to the history information (refer to FIG. 6) indicating one or more steps, executor 103 generates the calculation sequence information (refer to FIG. 7) indicating the reverse order of a sequence in which the one or more steps are performed. Subsequently, in accordance with the calculation sequence information, attention is focused on each of the one or more steps on in the reverse order of the sequence in which the one or more steps are performed, and the impact information can be calculated using at least a computation process in which the quantity of the workpieces after a step of interest, which is the step receiving attention, is performed is multiplied by the reciprocal of the yield ratio of the step of interest to calculate the quantity of the workpieces before the step of interest is performed. More specifically, regarding each step, the amount of power consumption in said step is calculated from the quantity of the workpieces calculated through said computation process, that amount of power consumption is multiplied with the emission factor (refer to FIG. 4), and thus the amount of greenhouse gas generated in said step is calculated as the impact information.

Note that in the calculation process, when the amount of environmental impacts indicated in the calculated impact information is relatively small, impact information indicating zero as the amount of environmental impacts can be calculated. In this case, on the premise that a reference value for the amount of environmental impacts has been stored in distributed ledger 111 in advance, the calculation process involves reading the reference value from distributed ledger 111 and, when the amount of environmental impacts indicated in the calculated impact information is less than or equal to the reference value, recalculating impact information indicating zero as the amount of environmental impacts. As a result, with a possible system where when the amount of environmental impacts is less than or equal to the reference value, the amount of environmental impacts is regarded as zero, executor 103 can properly calculate environmental impacts consistent with that system.

In Step S207, executor 103 stores, into distributed ledger 111, the impact information calculated in Step S206. Note that the process of storing said impact information into distributed ledger 111 may be included in the calculation process in Step S206. Furthermore, the impact information stored in distributed ledger 111 can be obtained by terminal T1 and presented to a user by being displayed on the display screen of terminal T1 or being output in the form of audio, for example.

Through the series of steps illustrated in FIG. 10, ledger system 10 can calculate the impact information and store the impact information into distributed ledger 111.

Note that there are cases where a byproduct is generated in a step in addition to the output. The following describes the method for calculating the impact information when a byproduct is generated in a step in addition to the output.

When a byproduct is generated in one or more steps, the information processing performed by executor 103 further includes: regarding a product (also referred to as a second product) generated from the byproduct, the reading process of reading, from distributed ledger 111, second history information indicating one or more second steps actually performed among a plurality of second steps performed to manufacture the second product and second yield information indicating a yield of each of the one or more second steps; and the calculation process of calculating, using the second history information and the second yield information, impact information indicating an environmental impact generated in manufacturing the second product, and storing the impact information into distributed ledger 111.

FIG. 11 is an explanatory diagram illustrating the second example of the manufacturing steps according to the present embodiment.

Similar to (a) in FIG. 3, FIG. 11 illustrates a plurality of steps performed to manufacture products.

Specifically, material 71, steps S51, S52, S53, and products 75, 76 are illustrated in FIG. 11. When Step S51 is performed on material 71 as a workpiece, output 72 is generated, and byproduct 73 is generated. When Step S52 is performed on output 72 as a workpiece, product 75 is generated. Furthermore, when Step S53 is performed on byproduct 73 as a workpiece, product 76 is generated.

Note that the series of steps for manufacturing product 75 from material 71 via steps S51, S52 is also referred to as route RA. The series of steps for manufacturing product 76 from byproduct 73 via step S53 is also referred to as route RB.

FIG. 12 is an explanatory diagram illustrating the second example of the execution sequence information according to the present embodiment.

As with FIG. 5, the execution sequence information illustrated in FIG. 12 is information representing, as a graph (more specifically, a directed graph): the plurality of steps performed to manufacture products; and the sequence in which the steps are performed.

In FIG. 12, similar to FIG. 5, Step S51 which is performed first corresponds to node N51 which is a source node, and Steps S52, S53 which are performed last correspond to nodes N52, N53 which are sink nodes.

Note that the graph including node N51 and node N52 correspond to route RA, and the graph including node N53 corresponds to route RB.

FIG. 13 is an explanatory diagram illustrating an example of route information according to the present embodiment.

The route information includes information regarding manufacturing steps (in other words, a route) in which an output and a byproduct are generated. The route information is stored in distributed ledger 111 of ledger server 11, etc. The route information may be updated.

In the route information illustrated in FIG. 13, information indicating an output route, a byproduct route, and an allocation criterion is stored.

The output route is information indicating the output route that is a series of steps in which the output is generated; for example, the output route is "route RA."

The byproduct route is information indicating the byproduct route that is a series of steps in which the byproduct is generated; for example, the byproduct route is "route RB."

The allocation criterion is information indicating a criterion (also referred to as an allocation criterion) applied to allocate the environmental impacts to route RA and route RB; the allocation criterion may be, for example, volume, quantity, weight, or value.

When products 75, 76 are manufactured, executor 103 can refer to the execution sequence information (refer to FIG. 12) and the route information (refer to FIG. 13), perform the process illustrated in FIG. 10, thereby calculate the impact information of each of route RA and route RB, and store the impact information into distributed ledger 111.

Note that an anomaly in a product can be identified using the execution sequence information. The following describes a method for identifying an anomaly in a product by using the execution sequence information.

FIG. 14 is an explanatory diagram illustrating the method for identifying an anomaly in a product by using the execution sequence information according to the present embodiment.

FIG. 14 illustrates, in addition to the execution sequence information illustrated in FIG. 5, the product determined to have an anomaly and the step or material identified as the cause of the anomaly.

When a plurality of products are manufactured, some of the plurality of products may include a product having an anomaly (what is called a defective product). In this case, executor 103 refers to the history information of that defective product and tracks the steps performed on that defective product, thereby identifying the step or material that is the cause of the anomaly. The step or material that is the cause of the anomaly can be identified, for example, by comparing the amount of time required to perform a step (also referred to as required time) to an appropriate range. Specifically, when a step with a required time outside the appropriate range is identified, said step can be determined to be the cause of the anomaly. In this case, executor 103 can generate information indicating that the identified step is the cause of the anomaly, and store the information into distributed ledger 111. Note that executor 103 may generate information indicating that the shipment of products located downstream of the step that is the cause of the anomaly is prohibited, and store the information into distributed ledger 111.

When executor 103 fails to identify a step that is the cause of the anomaly, even after tracking the steps performed on that defective product back to the initial step, executor 103 can determine that the material is the cause of the anomaly. In this case, executor 103 can generate information indicating that the material is the cause of the anomaly, and store the information into distributed ledger 111. Note that executor 103 may generate information indicating that the shipment of all the products manufactured from that material is prohibited, and store the information into distributed ledger 111.

For example, when at least some of white PS 63A indicated in FIG. 14 are defective products, executor 103 refers to the history information regarding white PS 63A, thereby obtaining the steps actually performed on white PS 63A. The following describes two examples of the history information.

FIG. 15 is an explanatory diagram illustrating the second example of the history information according to the present embodiment.

Using the timestamp of the start time and the timestamp of the end time in the history information regarding white PS 63A, executor 103 can calculate the time required for a step.

In the history information illustrated in FIG. 15, the time required for Step S31 is four hours. When the appropriate range for the time required for Step S31 is greater than or equal to one hour and less than two hours, executor 103 can determine that the actual required time of four hours is outside the appropriate range and can thereby identify Step S31 as a step that is the cause of the anomaly.

In this case, executor 103 can generate information indicating that Step S31 is the cause of the anomaly (for example, "Anomaly (1)" in FIG. 14), and store the information into distributed ledger 111. Note that executor 103 may generate information indicating that the shipment of the products located downstream of Step S31, namely, white PS 63A and white ABS 64A, is prohibited, and store the information into distributed ledger 111.

FIG. 16 is an explanatory diagram illustrating the third example of the history information according to the present embodiment.

Executor 103 can calculate the time required for a step in the history information regarding white PS 63A using substantially the same method as that described above.

In the history information illustrated in FIG. 16, none of the steps is outside the appropriate range. Executor 103 can determine that none of the steps is outside the appropriate range and can thereby identify blended resin 51 as a material that is the cause of the anomaly.

In this case, executor 103 can generate information indicating that blended resin 51 is the cause of the anomaly (for example, "Anomaly (2)" in FIG. 14), and store the information into distributed ledger 111. Note that executor 103 may generate information indicating that the shipment of all the products manufactured from blended resin 51 as a material (specifically, white PP 61A, black PP 62A, white PS 63A, white ABS 64A, black PS 65A, and black ABS 66A) is prohibited, and store the information into distributed ledger 111.

In this manner, when an anomaly exists in the manufactured product, executor 103 can identify whether the cause of the anomaly lies in the one or more steps or in the material, and store, into distributed ledger 111, identification information for identifying the cause of the anomaly.

The following describes the data structure of the distributed ledger, the execution of the smart contract, and the data structure of the NFT.

FIG. 17 is an explanatory diagram illustrating the data structure of a blockchain which is an example of the distributed ledger.

A blockchain is made up of blocks, each of which is a recording unit of the blockchain, linked together in the form of a chain. Each of the blocks includes a plurality of items of transaction data and a hash value of an immediately preceding block.

FIG. 17 illustrates blocks B1, B2, and B3 included in the blockchain.

For example, block B2 includes the hash value of previous block B1. The hash value of block B1 is a hash value calculated by an operation on the content of block B1 according to a hash algorithm.

Furthermore, a hash value calculated using the hash value of block B1 and the plurality of items of transaction data included in block B2 is included in block B3 as the hash value of block B2.

Thus, a blockchain is configured such that blocks each including the content of a previous block as a hash value are linked together in the form of a chain and therefore, the recorded transaction data can be effectively prevented from being tempered with.

If previous transaction data is changed (in other words, tampered with), the hash value of the block including said transaction data becomes different from the original value. In this case, in order to make the block including the modified transaction data look correct, all the blocks subsequent to said block in the distributed ledger stored in the plurality of servers need to be recreated, which is an extremely difficult task in practice. With this feature, the transaction data included in the blockchain can be virtually impossible to tamper with.

Note that in storing transaction data into a blockchain, a node generates a block including the transaction data to be stored and performs a process based on a consensus algorithm to form an agreement on the generated block with other nodes. When the agreement is formed, the node performs control to store said block in the blockchain. Thus, the plurality of nodes that operate in an autonomous, decentralized manner can connect valid blocks to the blockchain. As the consensus algorithm, practical byzantine fault tolerance (PBFT) may be used, or proof of work (PoW), proof of stake (PoS), or the like may be used. Note that when Hyperledger Fabric is used as an example of the distributed ledger technology, the consensus algorithm does not need to be executed.

FIG. 18 is an explanatory diagram illustrating the data structure of the transaction data.

The transaction data illustrated in FIG. 18 includes transaction body BP1 and digital signature BP2 (also referred to simply as the signature). Transaction body BP1 is a data body included in said transaction data. Digital signature BP2 is generated by encrypting the hash value of transaction body BP1 with a signature key (in other words, a private key) of a creator of said transaction data.

Using digital signature BP2 included in the transaction data, a node that has received the transaction data can verify that transaction body BP1 is valid (in other words, has not been tampered with). Thus, the data included in transaction body BP1 can be virtually impossible to tamper with. Furthermore, by storing the successfully verified transaction data in the blockchain, the validity of the transaction data stored in the blockchain can be maintained.

As described above, the transaction data included in the blockchain is joined together using the hash values of the transaction data and the hash values of the blocks when stored in the blockchain. This allows the transaction data included in the blockchain to be stored and maintained in a substantially tamper-proof manner. This is an advantage different from that of a distributed database or a database in which a collection of data is simply stored.

FIG. 19 is an explanatory diagram illustrating transaction data related to the execution of the smart contract. FIG. 20 is a flowchart illustrating the processing related to the execution of the smart contract.

With reference to FIG. 19 and FIG. 20, a series of processes related to the execution of the smart contract using the distributed ledger will be described.

In Step SB1, a node stores, into distributed ledger B10, transaction data B11 including contract code B12 in which the processing of the smart contract is written. For example, the node receives transaction data B11 from an information processing device via communication or the node itself generates transaction data B11 and thus, the node obtains transaction data B11, and stores obtained transaction data B11 into distributed ledger B10. Step SB1 is performed before the smart contract is executed.

In Step SB2, the node stores, into distributed ledger B10, transaction data B15 including command B16 to cause the execution of the smart contract. For example, the node receives transaction data B15 from an information processing device via communication and stores received transaction data B15 into distributed ledger B10.

In Step SB3, the node reads contract code B12 from distributed ledger B10 as a result of transaction data B15 including command B16 being stored into distributed ledger B10 in Step SB2, and performs a process based on contract code B12. The result of said process may be included in the transaction data and stored into distributed ledger B10.

When the distributed ledger system receives transaction data B15 including command B16 to cause the execution of the smart contract, the distributed ledger system automatically (in other words, without manual intervention) performs processes that follow command B16 by the above-described series of processes and can therefore perform the processes efficiently (in other words, at high speed or in a short time). Realization of the efficient processes results in the effect of reduced power consumption. Furthermore, since there is no manual intervention, tampering with information by a person, a fraudulent act, or a human error can be prevented. Moreover, since the result of the processes performed in this manner is stored in the blockchain, the result of the processes can be virtually impossible to tamper with.

FIG. 21 is an explanatory diagram illustrating the structures of an NFT and metadata. The NFT, which is a unique token (in other words, a non-fungible token), is a token stored in the distributed ledger. The NFT is standardized as Ethereum request for comments (ERC) 721, for example, but this is not limiting; the NFT may be a token that complies with a standard different from ERC 721 or may be a token that complies with no standards (for example, a token specific to an organization). Note that ERC 721 is a standard for unique tokens, but the NFTs described in the present specification do not necessarily need to be unique tokens.

FIG. 21 illustrates transaction data B21 stored in the distributed ledger. In transaction data B21, an NFT is stored. The NFT includes a token ID (specifically, identification information that allows the NFT to be uniquely identified).

The NFT includes metadata. The metadata may be positioned (for example, in storage device B22) to be accessible via a network. A token URI indicating the position of the metadata is calculated using the token ID of the NFT and a predetermined base URI.

Information managed as the NFT may be included in transaction data B21 or may be included in the metadata. Including the information managed as the NFT in the metadata is advantageous in that the amount of information included in transaction data B21 (in other words, the information included in the blockchain) can be reduced. In this case, it can also be said that the metadata includes the substance of the information managed as the NFT. When an image is managed as the NFT, an URL indicating the image data of said image can be managed as the NFT.

Note that in the above embodiment, each of the structural elements may be configured in the form of an exclusive hardware product, or may be realized by executing a software program suitable for the structural element. Each of the structural elements may be realized by means of a program executing unit, such as a CPU or a processor, reading and executing the software program recorded on a recording medium such as a hard disk or a semiconductor memory. Here, the software program for realizing the information processing device, etc., according to the above embodiment is a program described below.

Specifically, this program causes a computer to perform an information processing method that is performed by one server among a plurality of servers included in a distributed ledger system and includes: reading a smart contract code from a distributed ledger stored in a storage device of the one server; and performing information processing using the distributed ledger, by executing the smart contract code read from the distributed ledger. The information processing includes: a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and a calculation process of calculating, using the history information and the yield information, impact information indicating an environmental impact generated in manufacturing the product, and storing the impact information in the distributed ledger.

The information processing method, etc., according to one or more aspects have been described thus far based on the embodiment, but the present invention is not limited to this embodiment. Various modifications to the present embodiment and forms configured by combining structural elements in different embodiments that can be conceived by those skilled in the art may be included within the scope of one or more aspects as long as these do not depart from the essence of the present invention.

### [Industrial Applicability]

The present invention is applicable to a system that conducts product lifecycle assessment.

### [Reference Signs List]

1 information processing system
10 ledger system
11, 12, 13 ledger server
20 management system
51, 52, 53, 54, 55 blended resin
61, 61A white PP
62, 62A black PP
63, 63A white PS
64, 64A white ABS
65, 65A black PS
66, 66A black ABS
101 communicator
102 ledger processor
103 executor
104 storage
111, B10 distributed ledger
B1, B2, B3 block
B11, B15, B21 transaction data
B12 contract code
B16 command
B22 storage device
BP1 transaction body
BP2 digital signature
N network
N11, N21, N22, N31, N32, N41, N42, N43, N44, N45, N46, N51, N52, N53 node
S11, S21, S22, S31 S32, S41, S42, S43, S44, S45, S46, S51, S52, S53 step
T1 terminal

## Claims

1. An information processing method performed by one server among a plurality of servers included in a distributed ledger system, the information processing method comprising:
reading a smart contract code from a distributed ledger stored in a storage device of the one server; and
performing information processing using the distributed ledger, by executing the smart contract code read from the distributed ledger, wherein
the information processing includes:
a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and
a calculation process of calculating, using the history information and the yield information, impact information indicating an environmental impact generated in manufacturing the product, and storing the impact information in the distributed ledger.

2. The information processing method according to claim 1, wherein
the yield information is one or more yield ratios of the one or more steps, and
in the calculation process:
with reference to the history information indicating the one or more steps, attention is focused on each of the one or more steps in a reverse order of a sequence in which the one or more steps are performed; and
the impact information is calculated using at least a computation process in which a quantity of a workpiece after a step of interest is performed is multiplied by a reciprocal of a yield ratio of the step of interest to calculate a quantity of the workpiece before the step of interest is performed, the step of interest being a step on which the attention is focused.

3. The information processing method according to claim 1, wherein
the information processing further includes:
a process of obtaining, from a management system, the yield information aggregated per predetermined aggregation period; and
a process of updating, using the yield information obtained, the yield information used for calculating the impact information, and
in the calculation process, the impact information is calculated using the yield information updated.

4. The information processing method according to claim 1, further comprising:
upon receiving notification information indicating that a step being performed has transitioned during manufacture of the product, updating the history information in the distributed ledger by additionally storing, in the history information, information indicating a step after the transition that is indicated in the notification information.

5. The information processing method according to claim 1, wherein
a reference value for an amount of the environmental impact is stored in the distributed ledger, and
in the calculation process, the reference value is read from the distributed ledger, and when the amount of the environmental impact indicated in the impact information calculated is less than or equal to the reference value, the impact information is recalculated to indicate zero as the amount of the environmental impact.

6. The information processing method according to claim 1, wherein
when a byproduct is generated in the plurality of steps, the information processing further includes:
a reading process of reading second history information and second yield information from the distributed ledger regarding a second product generated from the byproduct, the second history information indicating one or more second steps actually performed among a plurality of second steps performed to manufacture the second product, the second yield information indicating one or more yields of the one or more steps; and
a calculation process of calculating, using the second history information and the second yield information, impact information indicating an environmental impact generated in manufacturing the second product, and storing the impact information in the distributed ledger.

7. The information processing method according to claim 1, wherein
the information processing further includes:
when an anomaly exists in the product manufactured, an identifying process of identifying whether a cause of the anomaly lies in the one or more steps or in a material of the product, and storing, in the distributed ledger, identification information for identifying the cause of the anomaly.

8. An information processing device that is one server among a plurality of servers included in a distributed ledger system, the information processing device comprising:
a processor; and
memory connected to the processor, wherein
using the memory, the processor:
reads a smart contract code from a distributed ledger stored in a storage device of the one server; and
performs information processing using the distributed ledger, by executing the smart contract code read from the distributed ledger, and
the information processing includes:
a reading process of reading history information and yield information from the distributed ledger upon receiving a notification indicating that a final step among a plurality of steps performed to manufacture a product has ended, the history information indicating one or more steps actually performed among the plurality of steps, the yield information indicating one or more yields of the one or more steps; and
a calculation process of calculating, using the history information and the yield information, impact information indicating an environmental impact generated in manufacturing the product, and storing the impact information in the distributed ledger.

9. A program for causing a computer to perform the information processing method according to claim 1.
